# EUROPEAN PATENT APPLICATION

(11) **EP 3 422 057 A1**
(43) Date of publication of application: **02.01.2019**
(21) Application number: 18177368.0
(22) Date of filing: 12.06.2018
(51) Int. Cl.: G02B 5/30, G02B 27/28

(54) **POLARIZED TYPE VIEWING ANGLE CONTROL ELEMENT, POLARIZED TYPE VIEWING ANGLE CONTROL DISPLAY MODULE, AND POLARIZED TYPE VIEWING ANGLE CONTROL LIGHT SOURCE MODULE**

(30) Priority: 15.06.2017 CN 201710452927
(71) Applicant: Young Lighting Technology Inc., Hsin-Chu 300 (TW)
(72) Inventor: CHEN, Ping-Yen, 300 Hsin-Chu (TW); FANG, Chung-Yang, 300 Hsin-Chu (TW); WANG, Wen-Chun, 300 Hsin-Chu (TW); HSU, Hsiung-Chun, 300 Hsin-Chu (TW)
(74) Representative: Ter Meer Steinmeister & Partner

(57) **Abstract**

A polarized type viewing angle control element including a biaxial compensation film and a plurality of polarizers is provided. The polarizers are disposed on opposite sides of the biaxial compensation film. A polarized type viewing angle control display module and a polarized type viewing angle control light source module are also provided.

## Description

This application claims the priority benefit of China application serial no. 201710452927.2, filed on June 15, 2017.

### BACKGROUND

### [Field of the Invention]

The invention relates to an optical element, a display module, and a light source module and particularly relates to a polarized type viewing angle control element, a polarized type viewing angle control display module, and a polarized type viewing angle control light source module.

### [Description of Related Art]

Generally speaking, display devices usually have wide viewing angle display effects so as for multiple viewers to view at the same time. However, in some situations, such as when surfing private webpages, browsing confidential information, or inputting passwords in public spaces, the wide viewing angle display effects allow confidential information to be peeped by others easily and cause confidential information leakage. The common method of achieving the anti-peeping effect is to place a light control film (LCF) in front of the display device so as to filter wide-angle light beams. However, the LCF not only has high price and large thickness but also decreases the overall luminance of the display device by 30%. In addition, the periodic structure of the LCF generates the Moiré pattern easily with the display device, thereby deteriorating the display quality.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY OF THE INVENTION

The invention provides a polarized type viewing angle control element that limits the viewing angle and prevents the Moiré pattern from being generated as well as avoids significant decrease of luminance.

The invention also provides a polarized type viewing angle control display module and a polarized type viewing angle control light source module using the polarized type viewing angle control element.

In order to achieve at least one of the objects or other objects, an embodiment of the invention provides a polarized type viewing angle control element including a biaxial compensation film and a plurality of polarizers. The polarizers are disposed on opposite sides of the biaxial compensation film.

Preferably, refractive indices of three principal axes of the biaxial compensation film comprise Nx, Ny, and Nz, wherein Nz is parallel to a thickness direction of the biaxial compensation film, every two of Nx, Ny, and Nz are perpendicular to each other, an angle between Nx and transmission axes of the plurality of polarizers is 45 degrees, and an angle between Ny and the transmission axes of the plurality of polarizers is 45 degrees.

Preferably, Nx>Nz, and the transmission axes of the plurality of polarizers on the opposite sides of the biaxial compensation film are perpendicular to each other.

Preferably, Nz>Nx, and the transmission axes of the plurality of polarizers on the opposite sides of the biaxial compensation film are parallel to each other.

Preferably, the number of the biaxial compensation film is N, the number of the plurality of polarizers is N+1, N is a positive integer greater than or equal to 1, and the biaxial compensation film is disposed between every two adjacent polarizers of the plurality of polarizers.

Preferably, the polarized type viewing angle control element further comprises an A-plate, a C-plate, or a combination of the A-plate and the C-plate, wherein the A-plate, the C-plate, or the combination of the A-plate and the C-plate is located between the plurality of polarizers and overlaps the biaxial compensation film.

Preferably, an in-plane retardation of the polarized type viewing angle control element is within a range from 200 nm to 300 nm, and an out-of-plane retardation of the polarized type viewing angle control element is within a range from 300 nm to 800 nm.

In order to achieve at least one of the objects or other objects, an embodiment of the invention provides a polarized type viewing angle control display module including a display module, a biaxial compensation film, and a polarizer. The display module includes a display module polarizer. The biaxial compensation film is disposed on a side of the display module proximate to the display module polarizer. The polarizer and the display module polarizer are respectively disposed on opposite sides of the biaxial compensation film.

Preferably, refractive indices of three principal axes of the biaxial compensation film comprise Nx, Ny, and Nz, wherein Nz is parallel to a thickness direction of the biaxial compensation film, every two of Nx, Ny, and Nz are perpendicular to each other, an angle between Nx and a transmission axis of the polarizer is 45 degrees, an angle between Ny and the transmission axis of the polarizer is 45 degrees, an angle between Nx and a transmission axis of the display module polarizer is 45 degrees, and an angle between Ny and the transmission axis of the display module polarizer is 45 degrees.

Preferably, Nx>Nz, and the transmission axis of the polarizer and the transmission axis of the display module polarizer are perpendicular to each other.

Preferably, Nz>Nx, and the transmission axis of the polarizer and the transmission axis of the display module polarizer are parallel to each other.

Preferably, the number of the biaxial compensation film is N, the number of the polarizer is N, N is a positive integer greater than 1, and the N biaxial compensation films and the N polarizers are alternately arranged on the side of the display module proximate to the display module polarizer.

Preferably, the number of the biaxial compensation film is N, the number of the polarizer is N+1, N is a positive integer greater than or equal to 1, and the N biaxial compensation films and the N polarizers are alternately arranged on the side of the display module proximate to the display module polarizer.

Preferably, the polarized type viewing angle control display module further comprising: a half-wave plate, disposed between the display module polarizer and one of the plurality of polarizers closest to the display module polarizer, wherein an angle between a transmission axis of the half-wave plate and one of a transmission axis of the display module polarizer and a transmission axis of one of the N polarizers closest to the display module polarizer is θ, and an angle between the transmission axis of the display module polarizer and the transmission axis of the one of the N polarizers closest to the display module polarizer falls within a range of 2θ±5° or 2θ+π/2±5°.

Preferably, the polarized type viewing angle control display module further comprising a half-wave plate, disposed between the biaxial compensation film and the display module polarizer.

Preferably, the polarized type viewing angle control display module further comprising: an A-plate, a C-plate, or a combination of the A-plate and the C-plate, wherein the A-plate, the C-plate, or the combination of the A-plate and the C-plate is located between the polarizer and the display module polarizer and overlaps the biaxial compensation film.

Preferably, an in-plane retardation of the polarized type viewing angle control display module is within a range from 200 nm to 300 nm, and an out-of-plane retardation of the polarized type viewing angle control display module is within a range from 300 nm to 800 nm.

Preferably, the display module further comprises a liquid crystal display panel, and the polarized type viewing angle control display module further comprises: a light source module, wherein the display module is located between the biaxial compensation film and the light source module, or the biaxial compensation film and the polarizer are located between the display module and the light source module.

Preferably, the display module further comprises an organic electroluminescence display panel, and the display module polarizer is located between the organic electroluminescence display panel and the biaxial compensation film.

Preferably, the polarized type viewing angle control display module further comprising: an electric control viewing angle switch, disposed between the display module polarizer and the biaxial compensation film, the electric control viewing angle switch comprising two transparent substrates, two transparent conductive layers located between the two transparent substrates, a liquid crystal layer located between the two transparent conductive layers, and an electric control viewing angle switch polarizer located on a side of the electric control viewing angle switch distant from the display module, wherein the liquid crystal layer comprises a plurality of liquid crystal molecules, and optical axes of the plurality of liquid crystal molecules are parallel to or perpendicular to a transmission axis of the electric control viewing angle switch polarizer.

In order to achieve at least one of the objects or other objects, an embodiment of the invention provides a polarized type viewing angle control light source module including a light source module and a polarized type viewing angle control element. The polarized type viewing angle control element is disposed on a light emitting side of the light source module and includes a biaxial compensation film and a plurality of polarizers. The polarizers are disposed on opposite sides of the biaxial compensation film.

Based on the above, the embodiments of the invention have at least one of the following advantages or effects. In the polarized type viewing angle control element disclosed in the embodiments of the invention, through the biaxial compensation film, the combination of the biaxial compensation film and the A-plate, the combination of the biaxial compensation film and the C-plate, or the combination of the biaxial compensation film, the A-plate, and the C-plate, an in-plane retardation within the range from 200 nm to 300 nm and an out-of-plane retardation within the range from 300 nm to 800 nm may be provided, and the effect of limiting the viewing angle is thereby achieved. In addition, the polarized type viewing angle control display module using the polarized type viewing angle control element and the polarized type viewing angle control light source module using the polarized type viewing angle control element may limit the azimuth angle. Because the shape of the viewing angle of the polarized type viewing angle control element is square, and the polarized type viewing angle control element may control the convergence angle of a light beam, the polarized type viewing angle control element well meets the market demand. In addition, because the polarized type viewing angle control element does not control the viewing angle through a periodic structure, the Moiré pattern is avoided from being generated. Compared to the commercial products on the market, such as the LCF, the polarized type viewing angle control element provided herein may have higher luminance at the front viewing angle, lower price, and smaller thickness. In an embodiment of the invention, the polarized type viewing angle control element may be applied to full anti-peeping displays or automotive displays.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic cross-sectional view of a polarized type viewing angle control element according to a first embodiment of the invention.
FIG. 2 illustrates a viewing angle distribution of the polarized type viewing angle control element in FIG. 1.
FIG. 3 and FIG. 4A illustrate the relationship between a light incident angle and transmittance of the polarized type viewing angle control element in FIG. 1.
FIG. 4B to FIG. 4D illustrate the viewing angle distribution of the polarized type viewing angle control element in FIG. 1 while an identical out-of-plane retardation and different in-plane retardations are given.
FIG. 5 is a schematic cross-sectional view of a polarized type viewing angle control element according to a second embodiment of the invention.
FIG. 6 illustrates a viewing angle distribution of the polarized type viewing angle control element in FIG. 5.
FIG. 7 is a schematic cross-sectional view of a polarized type viewing angle control element according to a third embodiment of the invention.
FIG. 8 illustrates a viewing angle distribution of the polarized type viewing angle control element in FIG. 7.
FIG. 9 illustrates the viewing angle distribution of the polarized type viewing angle control element in FIG. 7, wherein the A-plate is replaced by a C-plate.
FIG. 10 to FIG. 16A are respectively schematic cross-sectional views of polarized type viewing angle control display modules according to a first embodiment to a seventh embodiment of the invention.
FIG. 16B is a schematic cross-sectional view of the electric control viewing angle switch in FIG. 16A.
FIG. 17 is a schematic cross-sectional view of a polarized type viewing angle control light source module according to an embodiment of the invention.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

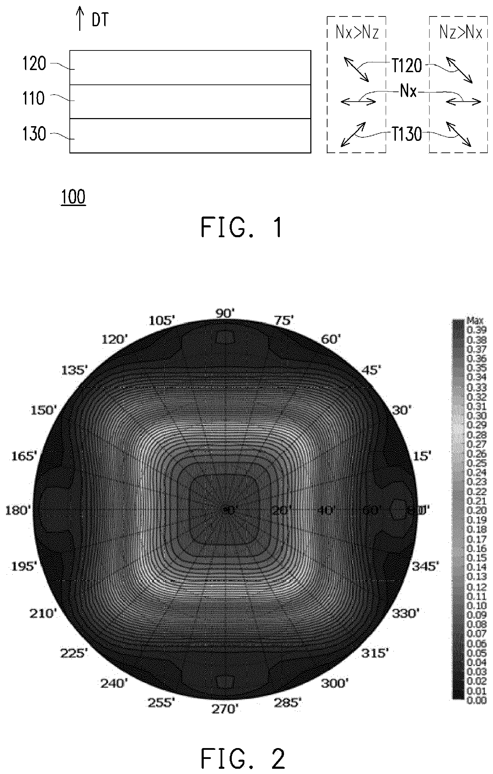

FIG. 1 is a schematic cross-sectional view of a polarized type viewing angle control element according to a first embodiment of the invention. Referring to FIG. 1, a polarized type viewing angle control element 100 provided in the first embodiment of the invention includes a biaxial compensation film 110, a polarizer 120, and a polarizer 130. The polarizer 120 and the polarizer 130 are disposed on opposite sides of the biaxial compensation film 110. For instance, the polarizer 130, the biaxial compensation film 110, and the polarizer 120 are successively stacked along a thickness direction of the polarized type viewing angle control element 100. In other words, in the polarized type viewing angle control element 100, the polarizer 120 is in direct contact with the biaxial compensation film 110, and the polarizer 130 is in direct contact with the biaxial compensation film 110. As such, there is no other film layer disposed between the polarizer 120 and the biaxial compensation film 110, and there is no other film layer disposed between the polarizer 130 and the biaxial compensation film 110.

Refractive indices of three principal axes of the biaxial compensation film 110 include Nx, Ny, and Nz, wherein Nz is parallel to a thickness direction DT of the biaxial compensation film 110, and every two of Nx, Ny, and Nz are perpendicular to each other. In addition, an angle between Nx and a transmission axis T120 of the polarizer 120 is 45 degrees, and an angle between Nx and a transmission axis T130 of the polarizer 130 is 45 degrees. An angle between Ny and the transmission axis T120 of the polarizer 120 is 45 degrees, and an angle between Ny and the transmission axis T130 of the polarizer 130 is 45 degrees. If Nx>Nz, the transmission axis T120 of the polarizer 120 and the transmission axis T130 of the polarizer 130 are perpendicular to each other. By contrast, if Nz>Nx, the transmission axis T120 of the polarizer 120 and the transmission axis T130 of the polarizer 130 are parallel to each other. In the polarized type viewing angle control element 100, the biaxial compensation film 110 provides an in-plane retardation within a range from 200 nm to 300 nm, and the biaxial compensation film 110 provides an out-of-plane retardation within a range from 300 nm to 800 nm.

The polarizer 120 and the polarizer 130 may be absorptive polarizers or reflective polarizers. For instance, the polarizer 120 and the polarizer 130 may both be the absorptive polarizers. Alternatively, the polarizer 120 and the polarizer 130 may both be the reflective polarizers. Moreover, one of the polarizer 120 and the polarizer 130 may be the absorptive polarizer, and the other of the polarizer 120 and the polarizer 130 may be the reflective polarizer.

FIG. 2 illustrates the viewing angle distribution of the polarized type viewing angle control element in FIG. 1. Specifically, the viewing angle distribution shown in FIG. 2 is the simulated result obtained on the condition that "Nx of the biaxial compensation film is located at the 0-degree azimuth angle, the in-plane retardation of the biaxial compensation film is half the incident wavelength (i.e., λ/2), a transmission axis of a polarizer at the light emission side is at the 45-degree azimuth angle, and a transmission axis of a polarizer at the light incident side is at the 135-degree azimuth angle". Each of the parameters for the simulation is listed in detail in Table 1. In Table 1, D represents the thickness of the biaxial compensation film, R0 represents the in-plane retardation of the biaxial compensation film, and R0=(Nx-Ny)*D. Rth represents the out-of-plane retardation of the biaxial compensation film, and Rth=[(Nx+Ny)/2-Nz]*D. According to FIG. 2, a beam at a front viewing angle is not absorbed by the polarizer at the light emission side, and the shape of the viewing angle distribution of the polarized type viewing angle control element is close to a square. In addition, if an angle between the viewing angle and the polarized type viewing angle control element increases (i.e., if the azimuth angle increases), a phase retardation of the polarized type viewing angle control element is greater than λ/2 because Nz≠Nx≠Ny, thereby resulting in an increase in absorptivity and a decrease in transmittance.

**Table 1**

| | |
|---|---|
| Nx | 1.5517 |
| Ny | 1.46 |
| Nz | 1.35 |
| D | 3 µm |
| R0 | 275.1 nm |
| Rth | 467.55 nm |

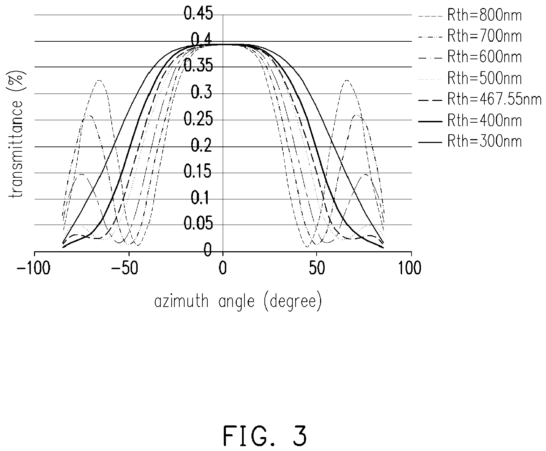

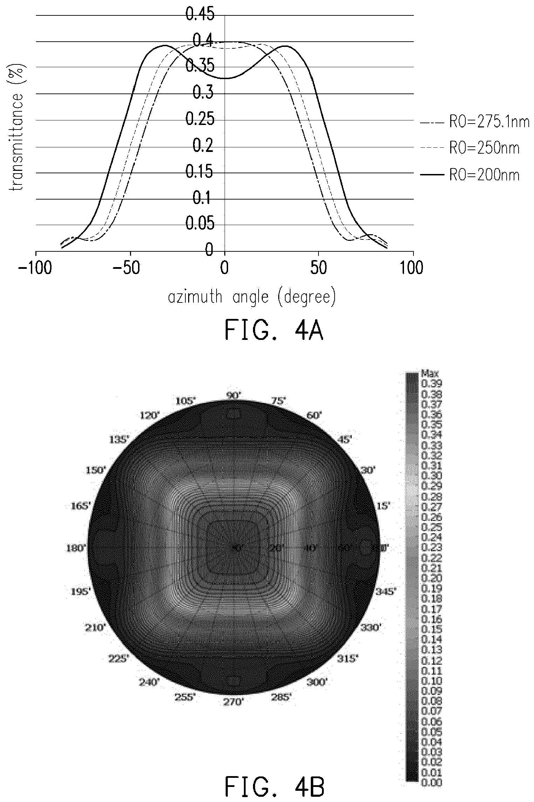

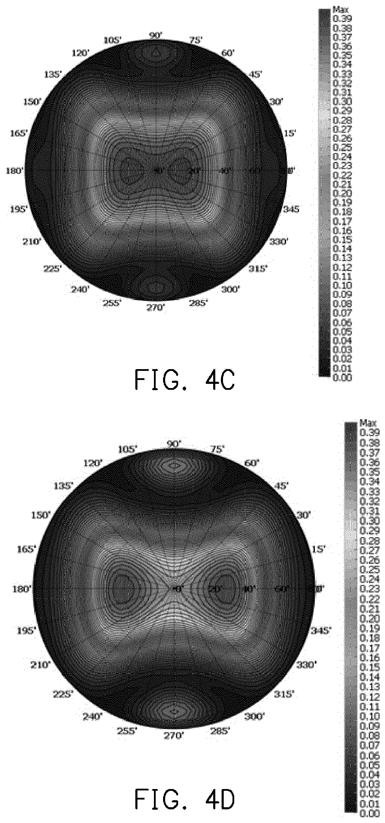

FIG. 3 and FIG. 4A illustrate the relationship between the light incident angle and the transmittance of the polarized type viewing angle control element in FIG. 1. FIG. 4B to FIG. 4D illustrate the viewing angle distribution of the polarized type viewing angle control element in FIG. 1 when an identical out-of-plane retardation and different in-plane retardations are given. FIG. 3 illustrates a transmittance curve on the condition that different Rth at 0 to 180 degrees azimuth angles and the same R0 (275.1 nm) are given. Referring to FIG. 3, the absorptive value of the polarized type viewing angle control element is mainly related to Rth. According to FIG. 3, the greater Rth is, the narrower the viewing angle of the polarized type viewing angle control element is. However, according to the drawing, as Rth increases, light leakage gradually occurs in the polarized type viewing angle control element at large angles. On the other hand, as Rth decreases, the viewing angle of the polarized type viewing angle control element is gradually increased. Therefore, when Rth falls within a range from 300 nm to 800 nm, the polarized type viewing angle control element has a narrow viewing angle, and the light leakage at large angles does not occur. FIG. 4A illustrates the transmittance curve on the condition that different R0 at 0 to 180 degrees azimuth angles and the same Rth (467 nm) are given. FIG. 4B to FIG. 4D illustrate the viewing angle distributions respectively on the condition that an R0 of 275.1 nm, 250 nm, and 200 nm and the same Rth (467 nm) are given. According to FIG. 4A to FIG. 4D, as R0 decreases, the transmittance of the beams at the horizontal angles (referring to 0- to 180-degree azimuth angles in the viewing angle distribution) may increase; in other words, as R0 decreases, the horizontal viewing angle gradually increases, and the transmittance of the light beams at the vertical angle (referring to 90- to 270-degree azimuth angles in the viewing angle distributions) slightly decreases, i.e., the vertical viewing angle is gradually narrowed down. Although the luminance at the front viewing angle decreases, the transmittance may remain to a certain degree as long as R0 is greater than or equal to 200 nm.

The automotive display (such as the display panels for navigation) is taken for example. If there is no shield on the top of the automotive display, the oblique light beams from the automotive display usually form a shadow on the windshield. In the daytime, since the light beam intensity from outside are far higher than the oblique light beam intensity from the automotive display forming the shadow, the shadow is less likely to affect the driver. However, at the nighttime, since the light beam intensity from outside are lower than the oblique light beam intensity from the automotive display forming the shadow, the driver cannot observe the situation outside the car through where the shadow is formed, which causes danger. Besides, because the automotive display may be positioned on one side of the driver rather than right in front of the driver, the horizontal viewing angle should be wide enough for the driver to be able to read the information displayed on the automotive display. If the automotive display is equipped with the polarized type viewing angle control element provided in the embodiment, the oblique light beams (beams at large angles) forming the shadow may be eliminated by the polarized type viewing angle control element, and the transmittance of the light beams at horizontal angles (such as beams at 30 degrees to 45 degrees) may be increased by decreasing R0, so as for the driver to be able to read the information on the automotive display positioned on one side of the driver.

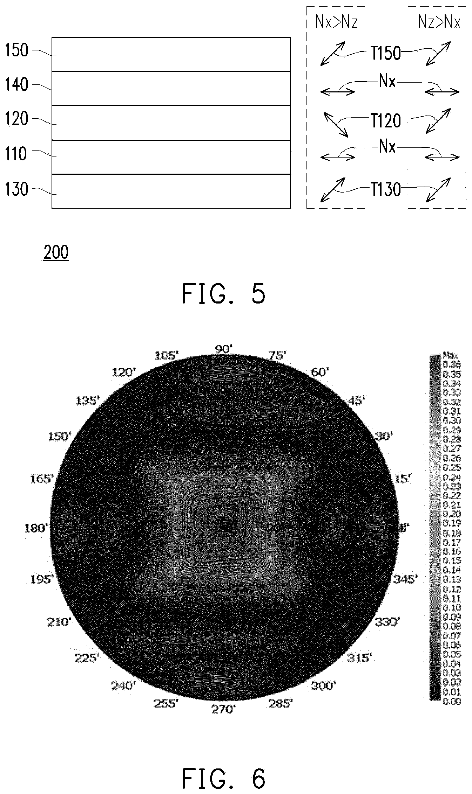

According to FIG. 3 to FIG. 4D, the viewing angle distribution of the polarized type viewing angle control element may be changed by changing Rth or R0, so that the anti-peeping effect may be achieved by arranging multiple biaxial compensation films. FIG. 5 is a schematic cross-sectional view of a polarized type viewing angle control element according to a second embodiment of the invention. Referring to FIG. 5, a polarized type viewing angle control element 200 provided in the second embodiment of the invention is similar to the polarized type viewing angle control element 100 depicted in FIG. 1, wherein identical elements are indicated by identical reference numerals and will not be further explained hereinafter.

Main differences between the polarized type viewing angle control element 200 and the polarized type viewing angle control element 100 depicted in FIG. 1 are described as follows. The polarized type viewing angle control element 200 further includes a biaxial compensation film 140 and a polarizer 150, wherein the biaxial compensation film 140 and the biaxial compensation film 110 are disposed on opposite sides of the polarizer 120, and the polarizer 150 and the polarizer 120 are disposed on opposite sides of the biaxial compensation film 140. For instance, the polarizer 130, the biaxial compensation film 110, the polarizer 120, the biaxial compensation film 140, and the polarizer 150 are successively stacked along a thickness direction of the polarized type viewing angle control element 200. In other words, in the polarized type viewing angle control element 200, the polarizer 130 is in direct contact with the biaxial compensation film 110, the biaxial compensation film 110 is in direct contact with the polarizer 120, the polarizer 120 is in direct contact with the biaxial compensation film 140, and the biaxial compensation film 140 is in direct contact with the polarizer 150. As such, there is no other film layer disposed between the polarizer 130 and the biaxial compensation film 110, between the biaxial compensation film 110 and the polarizer 120, between the polarizer 120 and the biaxial compensation film 140, and between the biaxial compensation film 140 and the polarizer 150.

The angle between the transmission axis T120 of the polarizer 120 and Nx of the biaxial compensation film 110 is 45 degrees, and an angle between the transmission axis T120 of the polarizer 120 and Nx of the biaxial compensation film 140 is 45 degrees as well. In addition, an angle between a transmission axis T150 of the polarizer 150 and Nx of the biaxial compensation film 140 is 45 degrees as well. If Nx>Nz, the transmission axis T150 of the polarizer 150 and the transmission axis T120 of the polarizer 120 are perpendicular to each other, and the transmission axis T150 of the polarizer 150 and the transmission axis T130 of the polarizer 130 are parallel to each other. By contrast, if Nz>Nx, the transmission axis T150 of the polarizer 150, the transmission axis T120 of the polarizer 120, and the transmission axis T130 of the polarizer 130 are parallel to one another.

FIG. 6 illustrates the viewing angle distribution of the polarized type viewing angle control element in FIG. 5. Specifically, the viewing angle distribution shown in FIG. 6 is the simulated result obtained on the condition that "both Nx of the two biaxial compensation films are located at the 0-degree azimuth angle, both in-plane retardations of the two biaxial compensation films are half the incident wavelength (i.e., λ/2), a transmission axis of the polarizer at the light emission side and a transmission axis of the polarizer at the light incident side are at the 135-degree azimuth angle, and a transmission axis of a polarizer disposed between the two biaxial compensation films is at the 45-degree azimuth angle". Each of the parameters for the simulation is listed in detail in Table 2. According to FIG. 6, a light beam at a front viewing angle is not absorbed by the polarizer at the light emission side, and the shape of the viewing angle distribution of the polarized type viewing angle control element is close to a square. The full anti-peeping effect may be achieved by arranging multiple biaxial compensation films.

**Table 2**

| | |
|---|---|
| Nx of the two biaxial compensation films | 1.5517 |
| Ny of the two biaxial compensation films | 1.46 |
| Nz of the biaxial compensation film at the light incident side | 1.24 |
| Nz of the biaxial compensation film at the light emission side | 1.3392 |
| D of the two biaxial compensation films | 3 µm |
| R0 of the two biaxial compensation films | 275.1 nm |
| Rth of the two biaxial compensation films | 467.55 nm |

It should be noted that the number of the biaxial compensation film and the number of the polarizer in the polarized type viewing angle control element are not limited to the above. In other embodiments, the number of the biaxial compensation film may be greater than 2. Correspondingly, the number of the polarizer may be greater than 3. Specifically, the number of the biaxial compensation film and the number of the polarizer satisfy the following conditions: the number of the biaxial compensation film is N, the number of the plurality of polarizers is N+1, N is a positive integer greater than or equal to 1, and the biaxial compensation film is disposed between every two adjacent polarizers.

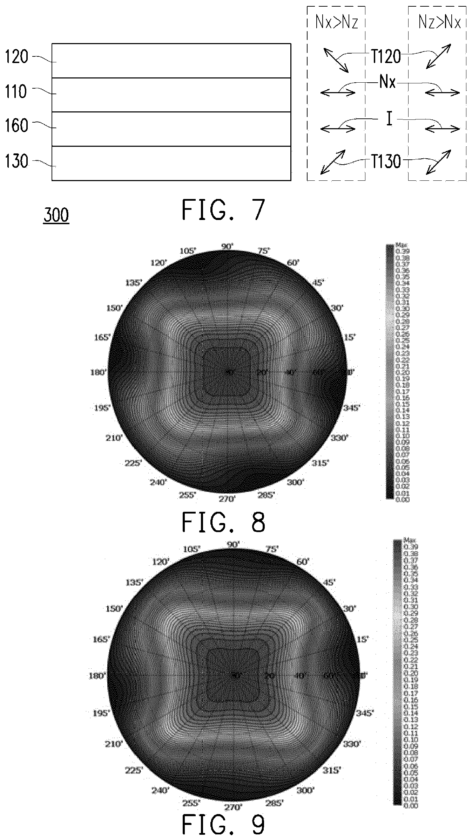

Because the value of R0 or Rth of the biaxial compensation film may deviate from the expected value due to choice of the material, the deviation of R0 or Rth may be further compensated by an A-plate, a C-plate, or a combination of the A-plate and the C-plate in an embodiment of the invention. FIG. 7 is a schematic cross-sectional view of a polarized type viewing angle control element according to a third embodiment of the invention. Referring to FIG. 7, a polarized type viewing angle control element 300 provided in the third embodiment of the invention is similar to the polarized type viewing angle control element 100 depicted in FIG. 1, wherein identical elements are indicated by identical reference numerals and will not be further explained hereinafter.

Main differences between the polarized type viewing angle control element 300 and the polarized type viewing angle control element 100 depicted in FIG. 1 are described as follows. The polarized type viewing angle control element 300 further includes an A-plate 160, wherein the A-plate 160 is disposed between the polarizer 120 and the polarizer 130 and is overlapped with the biaxial compensation film 110. For instance, the biaxial compensation film 110 may be located between the A-plate 160 and the polarizer 120, or the A-plate 160 may be located between the biaxial compensation film 110 and the polarizer 120. In addition, an optical axis I of the A-plate 160 is parallel to Nx of the biaxial compensation film 110. In this embodiment, the sum of the in-plane retardations provided by the biaxial compensation film 110 and by the A-plate 160 falls within a range from 200 nm to 300 nm, and the sum of the out-of-plane retardations provided by the biaxial compensation film 110 and by the A-plate 160 falls within a range from 300 nm to 800 nm.

FIG. 8 illustrates the viewing angle distribution of the polarized type viewing angle control element in FIG. 7. Specifically, the viewing angle distribution shown in FIG. 8 is the simulated result obtained on the condition that "Nx of the biaxial compensation film is located at the 0-degree azimuth angle, an in-plane retardation of the biaxial compensation film is equal to half the incident wavelength (i.e., λ/2), a transmission axis of the polarizer at the light incident side is at the 135-degree azimuth angle, and a transmission axis of the polarizer at the light emission side is at the 45-degree azimuth angle," wherein Rth and R0 of the biaxial compensation film are respectively 400 nm and 120 nm, and Rth and R0 of the A-plate are respectively 0 nm and 175.1 nm.

As a comparison, FIG. 9 illustrates the viewing angle distribution of the polarized type viewing angle control element in FIG. 7, wherein the A-plate is replaced by a C-plate. Specifically, the viewing angle distribution shown in FIG. 9 is the simulated result obtained on the condition that "Nx of the biaxial compensation film is located at the 0-degree azimuth angle, an in-plane retardation of the biaxial compensation film is equal to half the incident wavelength (i.e., λ/2), a transmission axis of the polarizer at the light incident side is at the 135-degree azimuth angle, and a transmission axis of the polarizer at the light emission side is at the 45-degree azimuth angle," wherein Rth and R0 of the biaxial compensation film are respectively 300 nm and 275.1 nm, and Rth and R0 of the C-plate are respectively 100 nm and 0 nm.

According to the simulated results shown in FIG. 8 and FIG. 9, the viewing angle distribution obtained by pairing the biaxial compensation film with the A-plate may be similar to a viewing angle distribution obtained by pairing the biaxial compensation film with the C-plate if the sum of Rth and the sum of R0 are identical. Therefore, in another embodiment, the A-plate 160 shown in FIG. 7 may be replaced by the C-plate, the sum of in-plane retardations provided by the biaxial compensation film and the C-plate falls within a range from 200 nm to 300 nm, and the sum of out-of-plane retardations provided by the biaxial compensation film and the C-plate falls within a range from 300 nm to 800 nm. In yet another embodiment, the A-plate 160 shown in FIG. 7 may be replaced by the combination of the A-plate and the C-plate, the sum of in-plane retardations provided by the biaxial compensation film and the combination of the A-plate and the C-plate falls within a range from 200 nm to 300 nm, and the sum of out-of-plane retardations provided by the biaxial compensation film and the combination of the A-plate and the C-plate falls within a range from 300 nm to 800 nm.

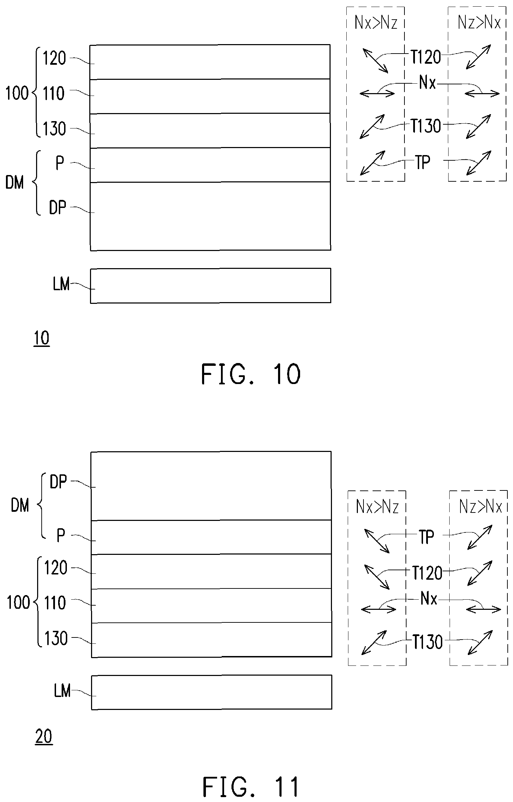

FIG. 10 to FIG. 16A are respectively schematic cross-sectional views of polarized type viewing angle control display modules according to a first embodiment to a seventh embodiment of the invention. Referring to FIG. 10, a polarized type viewing angle control display module 10 provided in the first embodiment of the invention includes a display module DM and the polarized type viewing angle control element 100 shown in FIG.1. The display module DM may include a display panel DP and a display module polarizer P. The polarized type viewing angle control element 100 is disposed on a side of the display module DM proximate to the display module polarizer P, and the transmission axis (e.g., the transmission axis T130) of the polarizer (e.g., the polarizer 130) proximate to the display module polarizer P in the polarized type viewing angle control element 100 is parallel to a transmission axis TP of the display module polarizer P.

The display panel DP may be a self-luminous display panel or a non-self-luminous display panel. If the display panel DP is a non-self-luminous display panel, the polarized type viewing angle control display module 10 may further include a light source module LM, such as a direct-type light source module or an edge-type light source module, so as to provide illumination beams. On the other hand, the light source module may be omitted if the display panel DP is a self-luminous display panel.

For instance, if the display panel DP is a liquid crystal display panel, the display module DM may include two display module polarizers P (FIG. 10 schematically illustrates only one display module polarizer P). The two display module polarizers P are disposed on opposite sides of the display panel DP, and the transmission axes TP of the two display module polarizers P may be perpendicular or parallel to each other. The display module DM may be disposed between the polarized type viewing angle control element 100 and the light source module LM, but the invention is not limited thereto. In another embodiment, the light source module LM depicted in FIG. 10 may be omitted if the display panel DP is an organic electroluminescence display panel.

By integrating the polarized type viewing angle control element 100 and the display module DM, the azimuth angle of the display light beams emitted from the polarized type viewing angle control display module 10 may be limited, so as for the polarized type viewing angle control display module 10 to achieve the anti-peeping effect. In addition, because the polarized type viewing angle control element 100 does not control the viewing angle through a periodic structure, the Moiré pattern may be avoided from being generated.

In an embodiment, the polarized type viewing angle control element 100 depicted in FIG. 10 may be replaced by a polarized type viewing angle control element having multiple biaxial compensation films (e.g., the polarized type viewing angle control element 200 shown in FIG. 5) or a polarized type viewing angle control element having a biaxial compensation film paired with an A-plate, with a C-plate, or with a combination of the A-plate and the C-plate (e.g., the polarized type viewing angle control element 300 shown in FIG. 7). Said adjustments may also be made in the following embodiments in the same manner and therefore will not be further described hereinafter.

Referring to FIG. 11, a polarized type viewing angle control display module 20 provided in the second embodiment of the invention is similar to the polarized type viewing angle control display module 10 depicted in FIG. 10, wherein identical elements are indicated by identical reference numerals and will not be further described hereinafter.

Main differences between the polarized type viewing angle control display module 20 and the polarized type viewing angle control display module 10 depicted in FIG. 10 are described as follows. In the polarized type viewing angle control display module 20, the polarized type viewing angle control element 100 is located between the display module DM and the light source module LM, and a transmission axis (e.g., the transmission axis T120) of a polarizer (e.g., the polarizer 120) proximate to the display module polarizer P in the polarized type viewing angle control element 100 is parallel to the transmission axis TP of the display module polarizer P. The display module DM is a non-self-luminous display panel, for example, a liquid crystal display panel.

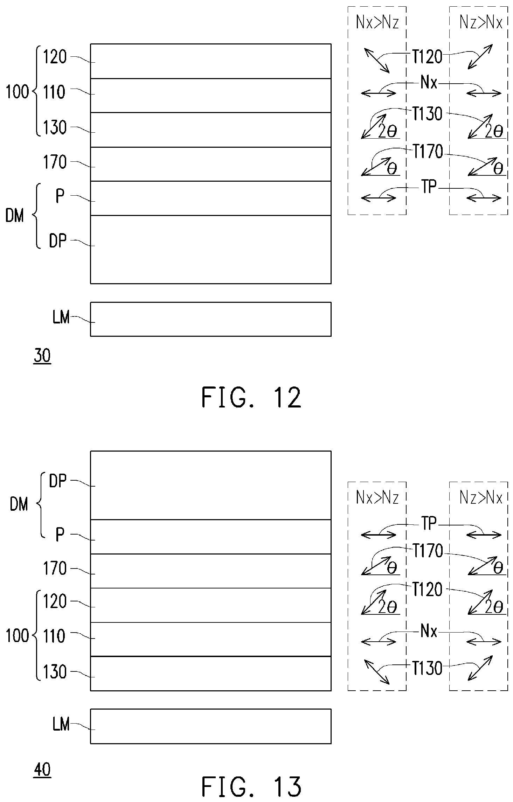

Referring to FIG. 12, a polarized type viewing angle control display module 30 provided in the third embodiment of the invention is similar to the polarized type viewing angle control display module 10 depicted in FIG. 10, wherein identical elements are indicated by identical reference numerals and will not be further described hereinafter.

Main differences between the polarized type viewing angle control display module 30 and the polarized type viewing angle control display module 10 depicted in FIG. 10 are described as follows. In the polarized type viewing angle control display module 30, a transmission axis (e.g., the transmission axis T130) of a polarizer (e.g., the polarizer 130) proximate to the display module polarizer P in the polarized type viewing angle control element 100 is not parallel to the transmission axis TP of the display module polarizer P. In addition, the polarized type viewing angle control display module 30 further includes a half-wave plate 170. The half-wave plate 170 is disposed between the display module polarizer P and a polarizer (e.g., the polarizer 130) located closest to the display module polarizer P, wherein an angle between an optical axis T170 of the half-wave plate 170 and one of a transmission axis of the display module polarizer P and a transmission axis of the polarizer (e.g., the polarizer 130) closest to the display module polarizer P (e.g., the transmission axis TP) is θ, and an angle between the transmission axis TP of the display module polarizer P and the transmission axis (e.g., the transmission axis T130) of the polarizer (e.g., the polarizer 130) closest to the display module polarizer P falls within a range of 2θ or 2θ+π/2, but the invention is not limited thereto. If the angle between the transmission axis TP of the display module polarizer P and the transmission axis (e.g., the transmission axis T130) of the polarizer (e.g., the polarizer 130) closest to the display module polarizer P falls within the range of 2θ±5° or 2θ+π/2±5°, the luminance at the front viewing angle is not significantly affected.

Referring to FIG. 13, a polarized type viewing angle control display module 40 provided in the fourth embodiment of the invention is similar to the polarized type viewing angle control display module 20 depicted in FIG. 11, wherein identical elements are indicated by identical reference numerals and will not be further described hereinafter.

Main differences between the polarized type viewing angle control display module 40 and the polarized type viewing angle control display module 20 depicted in FIG. 11 are described as follows. In the polarized type viewing angle control display module 40, a transmission axis (e.g., the transmission axis T120) of a polarizer (e.g., the polarizer 120) proximate to the display module polarizer P in the polarized type viewing angle control element 100 is not parallel to the transmission axis TP of the display module polarizer P. In addition, the polarized type viewing angle control display module 40 further includes a half-wave plate 170. The half-wave plate 170 is disposed between the display module polarizer P and a polarizer (e.g., the polarizer 120) located closest to the display module polarizer P, wherein an angle between an optical axis T170 of the half-wave plate 170 and one of a transmission axis of the display module polarizer P and a transmission axis of one polarizer (e.g., the polarizer 120) located closest to the display module polarizer P (e.g., the transmission axis TP) is θ, and an angle between the transmission axis TP of the display module polarizer P and the transmission axis (e.g., the transmission axis T120) of a polarizer (e.g., the polarizer 120) closest to the display module polarizer P is 2θ or 2θ+π/2, but the invention is not limited thereto. If the angle between the transmission axis TP of the display module polarizer P and the transmission axis (e.g., the transmission axis T120) of the polarizer (e.g., the polarizer 120) closest to the display module polarizer P falls within the range of 2θ±5° or 2θ+π/2±5°, the luminance at the front viewing angle is not significantly affected.

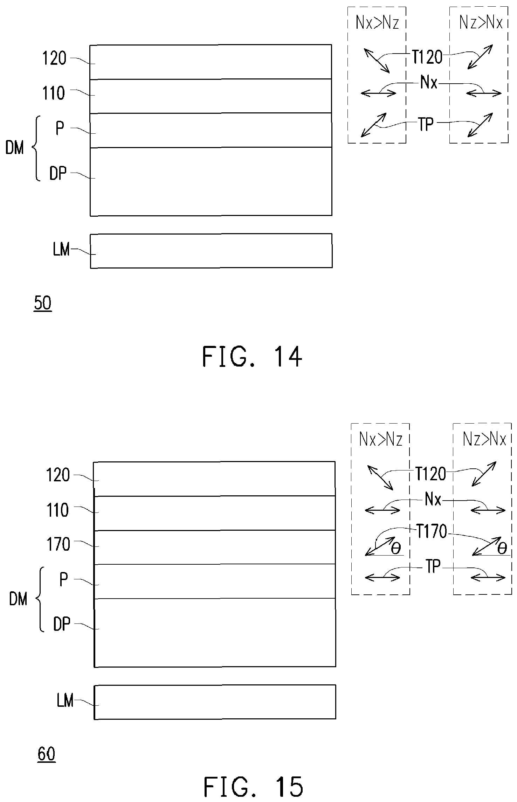

Referring to FIG. 14, a polarized type viewing angle control display module 50 provided in the fifth embodiment of the invention is similar to the polarized type viewing angle control display module 10 depicted in FIG. 10, wherein identical elements are indicated by identical reference numerals and will not be further described hereinafter.

Main differences between the polarized type viewing angle control display module 50 and the polarized type viewing angle control display module 10 depicted in FIG. 10 are described as follows. The polarized type viewing angle control display module 50 is omitted the polarizer (e.g., the polarizer 130) closest to the display module polarizer P depicted in FIG. 10, and the polarizer 120 and the display module polarizer P are respectively disposed on opposite sides of the biaxial compensation film 110.

It should be additionally noted that, in the embodiment depicted in FIG. 11, the polarizer (e.g., the polarizer 120) closest to the display module polarizer P may also be omitted in the polarized type viewing angle control display module 20.

Referring to FIG. 15, a polarized type viewing angle control display module 60 provided in the sixth embodiment of the invention is similar to the polarized type viewing angle control display module 30 depicted in FIG. 12, wherein identical elements are indicated by identical reference numerals and will not be further described hereinafter.

Main differences between the polarized type viewing angle control display module 60 and the polarized type viewing angle control display module 30 depicted in FIG. 12 are described as follows. The polarized type viewing angle control display module 60 is omitted the polarizer shown in FIG. 12 (e.g., the polarizer 130) closest to the display module polarizer P.

It should be additionally noted that, in the embodiment depicted in FIG. 13, the polarizer (e.g., the polarizer 120) closest to the display module polarizer P may also be omitted in the polarized type viewing angle control display module 40.

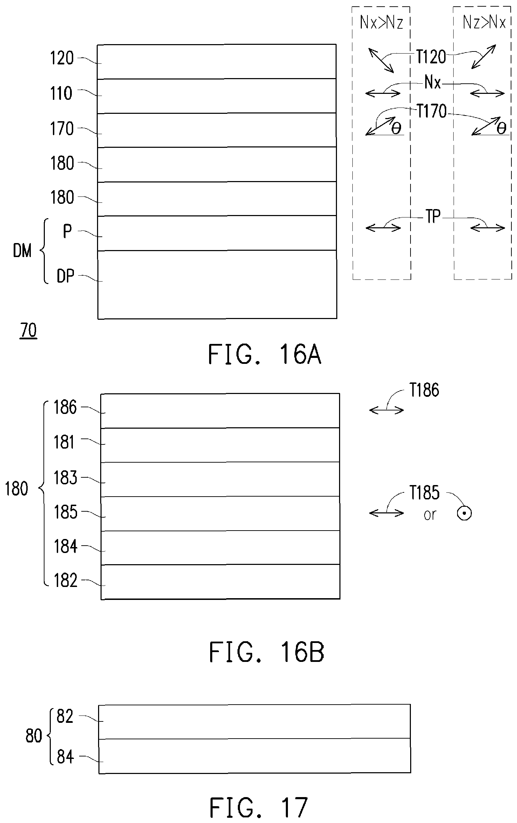

Referring to FIG. 16A, a polarized type viewing angle control display module 70 provided in the seventh embodiment of the invention is similar to the polarized type viewing angle control display module 60 depicted in FIG. 15, wherein identical elements are indicated by identical reference numerals and will not be further described hereinafter.

Main differences between the polarized type viewing angle control display module 70 and the polarized type viewing angle control display module 60 depicted in FIG. 15 are described as follows. In the polarized type viewing angle control display module 70, the display panel DP of the display module DM is an organic electroluminescence display panel, for example, and the polarized type viewing angle control display module 70 is omitted the light source module LM depicted in FIG. 15. The polarized type viewing angle control display module 70 further includes one or a plurality of electric control viewing angle switches 180. FIG. 16A illustrates the polarized type viewing angle control display module 70 including two electric control viewing angle switches 180, but the number of the electric control viewing angle switch 180 is not limited thereto. The electric control viewing angle switches 180 are disposed between the display module polarizer P and the biaxial compensation film 110, and the electric control viewing angle switches 180 are disposed, for example, between the display module polarizer P and the half-wave plate 170.

FIG. 16B is a schematic cross-sectional view of the electric control viewing angle switch depicted in FIG. 16A. Referring to FIG. 16A and FIG. 16B, the electric control viewing angle switch 180 may include a transparent substrate 181, a transparent substrate 182, a transparent conductive layer 183 located between the transparent substrate 181 and the transparent substrate 182, a transparent conductive layer 184 located between the transparent substrate 181 and the transparent substrate 182, a liquid crystal layer 185 located between the transparent conductive layer 183 and the transparent conductive layer 184, and an electric control viewing angle switch polarizer 186 located on a side of the electric control viewing angle switch 180 distant from the display module DM. A transmission axis T186 of the electric control viewing angle switch polarizer 186 is parallel to the transmission axis TP of the display module polarizer P.

A material of the transparent substrate 181 and the transparent substrate 182 may be glass or plastic, but the invention is not limited thereto. A material of the transparent conductive layer 183 and the transparent conductive layer 184 may be metal oxide, but the invention is not limited thereto. The liquid crystal layer 185 includes a plurality of liquid crystal molecules, and optical axes T185 of the liquid crystal molecules are parallel to or perpendicular to the transmission axis T186 of the electric control viewing angle switch polarizer 186.

Through disposing at least one electric control viewing angle switch 180, the viewing angle of the polarized type viewing angle control display module 70 may be further reduced, and the anti-peeping effect may be improved thereby.

FIG. 17 is a schematic cross-sectional view of a polarized type viewing angle control light source module according to an embodiment of the invention. Referring to FIG. 17, a polarized type viewing angle control light source module 80 includes a polarized type viewing angle control element 82 and a light source module 84. The polarized type viewing angle control element 82 is disposed on a light emitting side of the light source module 84, and the polarized type viewing angle control element 82 may be the polarized type viewing angle control element 100 depicted in FIG. 1, the polarized type viewing angle control element 200 depicted in FIG. 5, or the polarized type viewing angle control element 300 depicted in FIG. 7. The light source module 84 may be a direct-type light source module or an edge-type light source module.

By disposing the polarized type viewing angle control element 82 on the light emitting side of the light source module 84, the azimuth angle of the luminous light beams emitted from the light source module 84 may be limited, so that the polarized type viewing angle control light source module 80 may be applied to a device having a limited viewing angle.

To sum up, the embodiments of the invention have at least one of the following advantages or effects. In the polarized type viewing angle control element provided in the embodiments of the invention, through the biaxial compensation film, the combination of the biaxial compensation film and the A-plate, the combination of the biaxial compensation film and the C-plate, or the combination of the biaxial compensation film, the A-plate, and the C-plate, the in-plane retardation within the range from 200 nm to 300 nm and the out-of-plane retardation within the range from 300 nm to 800 nm may be provided, and the effect of limiting the viewing angle is thereby achieved. In addition, the polarized type viewing angle control display module using the polarized type viewing angle control element and the polarized type viewing angle control light source module using the polarized type viewing angle control element may limit the azimuth angle. Because the shape of the viewing angle distribution of the polarized type viewing angle control element is square, and the polarized type viewing angle control element may control the convergence angle of a light beam, the polarized type viewing angle control element well meets the market demand. In addition, because the polarized type viewing angle control element does not control the viewing angle through a periodic structure, the Moiré pattern is prevented from being generated. In addition, compared to the commercial products on the market, the polarized type viewing angle control element may have higher luminance at the front viewing angle. Moreover, compared to the LCF, the polarized type viewing angle control element has lower price and smaller thickness. In an embodiment of the invention, the polarized type viewing angle control element may also be applied to the full anti-peeping display or the automotive displays.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A polarized type viewing angle control element, comprising:
a biaxial compensation film; and
a plurality of polarizers, disposed on opposite sides of the biaxial compensation film.

2. The polarized type viewing angle control element according to claim 1, wherein refractive indices of three principal axes of the biaxial compensation film comprise Nx, Ny, and Nz, wherein Nz is parallel to a thickness direction of the biaxial compensation film, every two of Nx, Ny, and Nz are perpendicular to each other, an angle between Nx and transmission axes of the plurality of polarizers is 45 degrees, and an angle between Ny and the transmission axes of the plurality of polarizers is 45 degrees.

3. The polarized type viewing angle control element according to claim 2, wherein Nx>Nz, and the transmission axes of the plurality of polarizers on the opposite sides of the biaxial compensation film are perpendicular to each other or wherein Nz>Nx, and the transmission axes of the plurality of polarizers on the opposite sides of the biaxial compensation film are parallel to each other.

4. The polarized type viewing angle control element according to any one of the preceding claims , wherein the number of the biaxial compensation film is N, the number of the plurality of polarizers is N+1, N is a positive integer greater than or equal to 1, and the biaxial compensation film is disposed between every two adjacent polarizers of the plurality of polarizers.

5. The polarized type viewing angle control element according to any one of the preceding claims, further comprising an A-plate, a C-plate, or a combination of the A-plate and the C-plate, wherein the A-plate, the C-plate, or the combination of the A-plate and the C-plate is located between the plurality of polarizers and overlaps the biaxial compensation film.

6. A polarized type viewing angle control light source module, comprising:
a light source module; and
a polarized type viewing angle control element according to any one of the preceding claims, disposed on a light emitting side of the light source module.

7. A polarized type viewing angle control display module, comprising:
a display module, comprising a display module polarizer;
a biaxial compensation film, disposed on a side of the display module proximate to the display module polarizer; and
a polarizer, the polarizer and the display module polarizer being respectively disposed on opposite sides of the biaxial compensation film.

8. The polarized type viewing angle control display module according to claim 7, wherein refractive indices of three principal axes of the biaxial compensation film comprise Nx, Ny, and Nz, wherein Nz is parallel to a thickness direction of the biaxial compensation film, every two of Nx, Ny, and Nz are perpendicular to each other, an angle between Nx and a transmission axis of the polarizer is 45 degrees, an angle between Ny and the transmission axis of the polarizer is 45 degrees, an angle between Nx and a transmission axis of the display module polarizer is 45 degrees, and an angle between Ny and the transmission axis of the display module polarizer is 45 degrees.

9. The polarized type viewing angle control display module according to claim 8, wherein Nx>Nz, and the transmission axis of the polarizer and the transmission axis of the display module polarizer are perpendicular to each other or wherein Nz>Nx, and the transmission axis of the polarizer and the transmission axis of the display module polarizer are parallel to each other.

10. The polarized type viewing angle control display module according to claim 7, 8 or 9, wherein the number of the biaxial compensation film is N, the number of the polarizer is N, N is a positive integer greater than 1, and the N biaxial compensation films and the N polarizers are alternately arranged on the side of the display module proximate to the display module polarizer; or wherein the number of the biaxial compensation film is N, the number of the polarizer is N+1, N is a positive integer greater than or equal to 1, and the N biaxial compensation films and the N polarizers are alternately arranged on the side of the display module proximate to the display module polarizer.

11. The polarized type viewing angle control display module according to any one of the claims 7-10, further comprising:
a half-wave plate, disposed between the display module polarizer and one of the plurality of polarizers closest to the display module polarizer, wherein an angle between a transmission axis of the half-wave plate and one of a transmission axis of the display module polarizer and a transmission axis of one of the N polarizers closest to the display module polarizer is θ, and an angle between the transmission axis of the display module polarizer and the transmission axis of the one of the N polarizers closest to the display module polarizer falls within a range of 2θ±5° or 2θ+π/2±5°; or, further comprising: a half-wave plate, disposed between the biaxial compensation film and the display module polarizer.

12. The polarized type viewing angle control display module according to any one of the claims 7-11, further comprising:
an A-plate, a C-plate, or a combination of the A-plate and the C-plate, wherein the A-plate, the C-plate, or the combination of the A-plate and the C-plate is located between the polarizer and the display module polarizer and overlaps the biaxial compensation film.

13. The polarized type viewing angle control display module according to any one of the claims 7-12, the polarized type viewing angle control element of claims 1-5 or the polarized type viewing angle control light source module of claim 6, wherein an in-plane retardation of the polarized type viewing angle control display module, of the polarized type viewing angle control element or of the polarized type viewing angle control light source module is within a range from 200 nm to 300 nm, and an out-of-plane retardation of the polarized type viewing angle control display module, of the polarized type viewing angle control element or of the polarized type viewing angle control light source module is within a range from 300 nm to 800 nm.

14. The polarized type viewing angle control display module according to any one of the claims 7-13, wherein the display module further comprises a liquid crystal display panel, and the polarized type viewing angle control display module further comprises:
a light source module, wherein the display module is located between the biaxial compensation film and the light source module, or the biaxial compensation film and the polarizer are located between the display module and the light source module or the display module further comprises an organic electroluminescence display panel, and the display module polarizer is located between the organic electroluminescence display panel and the biaxial compensation film.

15. The polarized type viewing angle control display module according to any one of claims 7-14, further comprising:
an electric control viewing angle switch, disposed between the display module polarizer and the biaxial compensation film, the electric control viewing angle switch comprising two transparent substrates, two transparent conductive layers located between the two transparent substrates, a liquid crystal layer located between the two transparent conductive layers, and an electric control viewing angle switch polarizer located on a side of the electric control viewing angle switch distant from the display module, wherein the liquid crystal layer comprises a plurality of liquid crystal molecules, and optical axes of the plurality of liquid crystal molecules are parallel to or perpendicular to a transmission axis of the electric control viewing angle switch polarizer.
